# EUROPÄISCHE PATENTSCHRIFT

(11) **EP 1 097 657 B1**
(45) Veröffentlichungstag und Bekanntmachung des Hinweises auf die Patenterteilung: **04.02.2004**
(21) Anmeldenummer: 00123184.4
(22) Anmeldetag: 26.10.2000
(51) Int. Cl.: A47B 9/20

(54) **Teleskopantriebseinheit**
Telescopic driving unit
Unité téléscopique d'entraînement

(30) Priorität: 03.11.1999 DE 29919215 U
(43) Veröffentlichungstag der Anmeldung: 09.05.2001
(73) Patentinhaber: Dewert Antriebs- und Systemtechnik GmbH & Co. KG, 32278 Kirchlengern (DE)
(72) Erfinder: Roither, Andreas, 33649 Bielefeld (DE)
(74) Vertreter: Specht, Peter, Dipl.-Phys.

(56) Entgegenhaltungen:
- EP-A- 0 538 208
- WO-A-87/06439
- DE-A- 2 000 081
- DE-A- 3 505 842
- DE-A- 3 617 990

## Beschreibung

Die Erfindung bezieht sich auf eine Teleskopantriebseinheit für ein verstellbares Möbelbauteil eines Möbels, die mit mindestens zwei rotierend antreibbaren Spindeln ausgerüstet ist, von denen eine mit einem Antrieb gekoppelt und ausschließlich rotierend antreibbar und die zweite bzw. die weiteren Spindeln zur Verfahrbarkeit in ihrer Längsrichtung bzw. in ihren Längsrichtungen durch Mitnehmer derart miteinander gekoppelt sind, daß sie mit gleicher Drehzahl und in gleicher Drehrichtung rotierend antreibbar sind, und die Mitnehmer formschlüssig in angepaßten Längsnuten der als Hohlspindeln ausgebildeten Spindeln geführt sind.

Die in Frage kommende Teleskopantriebseinheit wird verwendet, um beispielsweise die Tischplatte eines Tisches zu verstellen. Es besteht bei vielen Anwendungsfällen die Forderung, daß der Verfahrbereich bzw. der Hub des ausfahrbares Teils bzw. der ausfahrbaren Teile bei einem äußerst geringen Einbaumaß relativ groß ist.

Solche Forderungen sind nur zu lösen, wenn die Antriebseinheit teleskopierbar ist. Bevorzugt werden für die in Rede stehenden Einbaufälle Antriebseinheiten in Form von mehrstufigen Spindeltrieben verwendet.

Der Antrieb für die Spindeln ist üblicherweise ein elektromotorischer Antrieb mit einem Untersetzungsgetriebe, um die Motordrehzahl zu reduzieren. Eine erste Spindel ist antriebstechnisch mit dem Antrieb gekoppelt und ausschließlich rotierend antreibbar. Die weiteren Spindeln sind in ihren Längsrichtungen verfahrbar. Die bislang bekannten Teleskopantriebseinheiten mit mehreren Spindeln sind so ausgelegt, daß die einzelnen Spindelstufen nacheinander ausfahren. Dadurch ist die Ausfahrgeschwindigkeit relativ gering und durch die Drehzahl und die Steigung der ausschließlich rotierend antreibbaren Spindeln bestimmt.

Ferner ist bei den bekannten Teleskopantriebseinheiten nachteilig, daß der Übergang von einer Spindelstufe zur nächsten ruckartig erfolgt. Ferner sind die bekannten Teleskopantriebseinheiten relativ kostenintensiv, da die Spindeln aus Stahl gefertigt sind und die auch in Längsrichtung verfahrbaren Spindeln ein Innen- und Außengewinde aufweisen.

Aus der DE 36 17 990 A1 ist eine als Hubvorrichtung ausgebildete Teleskopantriebseinheit mit zwei Spindeln bekannt, bei der die Spindeln durch Mitnehmer derart miteinander gekoppelt sind, daß sie mit gleicher Drehzahl und in gleicher Drehrichtung rotierend antreibbar sind.

Durch die Mitnehmer oder die sonstigen Koppelelemente ist es nunmehr möglich, daß bei eingeschaltetem Antrieb die gesamten Spindeln der Teleskopantriebseinheit gleichzeitig rotierend angetrieben werden, so daß mit Ausnahme der an den Antrieb angeschlossenen Spindel die restlichen Spindeln sich in ihren Längsrichtungen bewegen, so daß das wie auch immer gestaltete Antriebsglied in Verbindung mit einem zu verstellenden Möbelbauteil mit einer Geschwindigkeit ausgefahren wird, die wesentlich größer ist als beispielsweise die Lineargeschwindigkeit einer Spindelmutter, die auf die ausschließlich rotierend antreibbare Spindel gesetzt ist. Selbst wenn die Teleskopantriebseinheit nur mit zwei Spindeln ausgerüstet ist, verdoppelt sich die Ausfahrgeschwindigkeit, wenn die Steigungen der Spindeln gleich sind. Durch Änderung der Steigungen läßt sich die Ausfahrgeschwindigkeit auch noch variieren. Da alle Spindeln gleichzeitig angetrieben werden, wird der ruckartige Übergang vermieden.

Die Mitnehmer sind formschlüssig mit den beiden angeschlossenen Spindeln verbunden, um das Drehmoment zu übertragen. Sie sind zweckmäßigerweise in angepaßten Längsnuten der als Hohlspindeln ausgebildeten Spindeln geführt. Damit die Ausfahrbewegung der zusätzlichen, in ihren Längsrichtungen verfahrbaren Spindeln nicht behindert wird, ist vorgesehen, daß der die Spindeln koppelnde bzw. die die Spindeln koppelnde Mitnehmer in den dem motorischen Antrieb abgewandten Endbereichen der Spindeln angeordnet ist bzw. sind.

In den Querschnitten gesehen sind die Spindeln der einzelnen Antriebsstufen konzentrisch zueinander angeordnet, wobei die innere Spindel mit dem elektromotorischen Antrieb gekoppelt ist. Dabei ergibt sich eine konstruktiv einfache Lösung, wenn auf die innere, mittels des elektromotorischen Antriebes antreibbare Spindel eine ausschließlich in Spindellängsrichtung verfahrbare und gegen Drehung gesicherte erste Spindelmutter aufgesetzt ist und daß auf die erste Spindelmutter eine zweite mit einem Außengewinde versehene, synchron mit der ersten Spindelmutter linear verfahrbare Spindel aufgesetzt bzw. aufgedreht ist, auf die eine zweite gegen Drehung gesicherte und ausschließlich linear verfahrbare Spindelmutter aufgesetzt ist.

In diesem Fall besteht die Teleskopantriebseinheit aus zwei Antriebs- bzw. Spindelstufen.

Der Erfindung liegt die Aufgabe zugrunde, eine Teleskopantriebseinheit der eingangs näher beschriebenen Art so zu gestalten, daß bei geringstmöglichen Abmessungen die Ausfahrgeschwindigkeit des an ein Möbelbauteil anzuschließenden Abtriebsgliedes zumindest gegenüber den bekannten Teleskopantriebseinheiten zu verdoppeln, wobei ferner die ruckartigen Übergänge vermieden werden sollen.

Die gestellte Aufgabe wird gelöst, indem an die letzte Spindelmutter ein gegen Drehung gesichertes Hubrohr angeschlossen ist, dessen freies Ende mit dem zu verstellenden Möbelbauteil verbindbar ist, und daß jede Spindelmutter an der dem motorischen Antrieb zugewandten Seite einen Flansch aufweist, der als Schiebeelement für die jeweilige Hohlspindel bzw. für das Hubrohr wirkt.

Sofern die Teleskopantriebseinheit mit zwei Spindeln ausgestattet ist, könnte an die zweite Spindelmutter ein Hubrohr angeschlossen sein. Entgegen dieser Ausführung ist es jedoch auch denkbar, daß an die zweite mit der zugeordneten Hohlspindel eine Antriebsstufe bildende Spindelmutter weitere funktionell gleichartige Antriebs- bzw. Spindelstufen angekoppelt sind. Die jeweils äußere Spindelmutter trägt dann das an ein Möbelbauteil anzuschließende Hubrohr. Damit die Spindelmuttern exakt geführt sind, ist vorgesehen, daß zumindest die erste und innere Spindelmutter und die Spindelmutter der äußersten und letzten Antriebsstufe in einem feststehenden Außenrohr gerührt sind. Dies läßt sich in einfachster Weise konstruktiv umsetzen, wenn die Spindelmuttern an der dem motorischen Antrieb zugewandten Seite einen Flansch aufweisen, und daß die jeweilige Hohlspindel oder das Hubrohr auf den im Durchmesser kleineren Bund aufgesetzt ist. Der Flansch wirkt dann bei angeschaltetem Antrieb als Schiebeelement für die Hohlspindel bzw. für das Hubrohr.

Zweckmäßigerweise ist die mit dem elektromotorischen Antrieb gekoppelte Spindel aus Stahl hergestellt und massiv, während die Spindeln der nachfolgenden Spindel bzw. Antriebsstufen Hohlspindeln sind, die aus Kunststoff gefertigt sind.

Die Teleskopantriebseinheit ist vielseitig verwendbar und die antriebstechnische Verbindung mit einem Antriebsmotor über ein die Drehzahl des Rotors herabsetzendes Getriebe kann vielfältig ausgeführt sein. Die jeweilige Ausführung richtet sich nach dem Einsatzfall. In einer ersten Ausführung ist vorgesehen, dass die zentrale Spindel mit dem Abtriebsglied eines Getriebes gekoppelt ist, dessen Eingangsglied mit einem Motor gekoppelt ist, und dass die Drehachse des Rotors des Antriebsmotors mit der Drehachse der ersten Spindel fluchtet. Dadurch wird eine Antriebseinheit geschaffen, die als Stabantrieb angesehen werden kann, da der Außendurchmesser des Antriebsmotors im wesentlichen mit dem Außendurchmesser des Außenrohres der Teleskopantriebseinheit übereinstimmt oder der Außendurchmesser des Antriebsmotors ein klein wenig größer ist. Es ist jedoch auch in einer zweiten Ausführung vorgesehen, dass die Drehachse des Rotors des Antriebsmotors parallel und im Abstand zur Drehachse der ersten Spindel verläuft, und dass das Abtriebsglied des Getriebes über einen Riementrieb oder eine Räderkette mit der ersten Spindel antriebstechnisch gekoppelt ist. Dadurch wird gegenüber der ersten Ausführung die Länge der Antriebseinheit reduziert. Es erfolgt eine schlupffreie Übertragung des Drehmomentes, wenn als Riementrieb ein Zahnriemenantrieb verwendet wird. Der Vorteil eines Riementriebes liegt darin, dass die Reibungsverluste geringer sind als bei einer Räderkette. Bei den zuvor genannten Ausführungen ist das zwischen dem Antriebsmotor und der ersten Spindel montierte Getriebe zweckmäßiger Weise ein Rädergetriebe, dessen Zentralachse mit der Drehachse der Spindel und des Rotors des Antriebsmotors fluchtet. Derartige Getriebe sind beispielsweise Umlaufgetriebe bzw. Planetengetriebe. In einer dritten Ausführung ist vorgesehen, dass die Drehachse des Rotors des Antriebsmotors winklig, vorzugsweise senkrecht zur Drehachse der ersten Spindel steht, und dass zwischen dem Antriebsmotor und der ersten Spindel ein die Drehzahl des Rotors des Antriebsmotors herabsetzender Rädertrieb mit sich kreuzenden Achsen vorzugsweise ein Schneckentrieb angeordnet ist. Die Stellung des Antriebsmotors zur ersten angetriebenen Spindel richtet sich nach dem Verwendungszweck. Die zuvor genannten Ausführungen sind besonders dann einzusetzen, wenn nur eine Teleskopantriebseinheit benötigt wird.

Bei Ausführungen, bei denen zur Verstellung eines Bauteiles mindestens zwei Teleskopantriebseinheiten benötigt werden, ist es bei einer ersten Ausführung vorgesehen, dass eine zentrale, mit einem Antriebsmotor ausgerüstete Antriebseinheit antriebstechnisch mit den Teleskopantriebseinheiten gekoppelt ist, vorzugsweise derart antriebstechnisch gekoppelt ist, dass die linear bewegbaren Antriebselemente synchron bewegbar sind. Dadurch entfällt eine Gleichlaufsteuerung von mehreren Antriebsmotoren, und es ist sichergestellt, dass das mittels der Teleskopantriebseinheiten verstellbare Bauteil nicht verkantet wird. Die antriebstechnische Verbindung der zentralen Antriebseinheit mit den ersten Spindeln der Teleskopantriebseinheiten kann auf verschiedene Weise erfolgen, beispielsweise über Riementriebe oder über Antriebselemente, deren Ausgangsglieder gegenüber den Eingangsgliedern wahlweise verstellbar sind. Derartige Antriebselemente sind beispielsweise biegsame Wellen, Gelenkwellen und dergleichen. Der Vorteil liegt darin, dass die zentrale Antriebseinheit innerhalb der Umgebungsbereiche der Teleskopantriebseinheiten an jede beliebige Stelle montiert werden kann. In bevorzugter Weise ist noch vorgesehen, dass eine Teleskopantriebseinheit in eine Säule, oder dass mehrere Teleskopantriebseinheiten in die Tischbeine eines Tisches montiert werden. Sofern die antriebstechnische Verbindung der zentralen Antriebseinheit mit den ersten Spindeln der Teleskopantriebseinheiten über Antriebselemente mit verstellbaren Ein- und Ausgangsgliedern hergestellt wird, ist es zweckmäßig, wenn das Ausgangsglied jedes Antriebselementes mit dem Eingangsglied eines Untersetzungsgetriebes gekoppelt wird, beispielsweise mit der Schnecke eines Schneckentriebes, da dann jedes Antriebselement mit der Drehzahl des Rotors des Antriebsmotors angetrieben wird, so dass ein entsprechend geringes Drehmoment übertragen werden muß.

Anhand der beiliegenden Zeichnung wird die Erfindung noch näher erläutert. Es zeigt:
- **Figur 1**: eine erfindungsgemäße Teleskopantriebseinheit als bevorzugtes Ausführungsbeispiel im Längsschnitt.
- **Figuren 2-4**: eine mit einer Teleskopantriebseinheit ausgerüstete Antriebseinheit in drei verschiedenen Ausführungen,
- **Figuren 5 u. 6**: eine mit mehreren Teleskopantriebseinheiten ausgerüstetes Möbel in zwei verschiedenen Ausführungen.

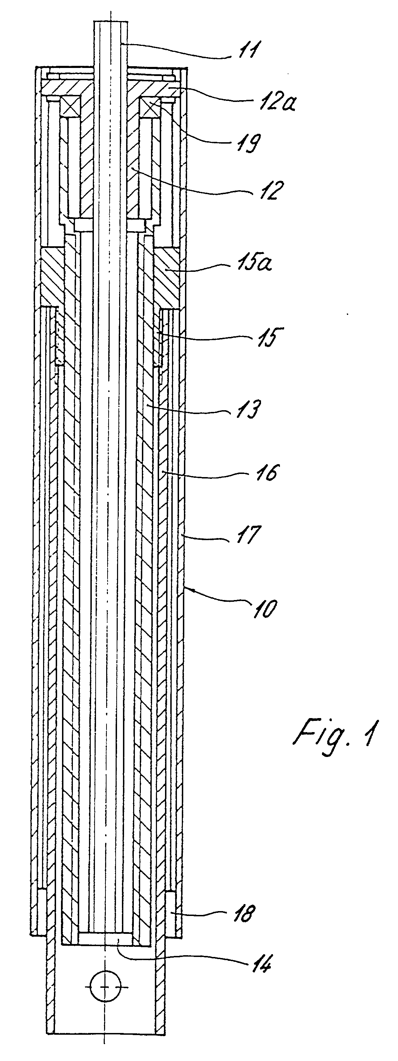

Bei der in der Figur 1 als ein Ausführungsbeispiel dargestellten Teleskopantriebseinheit 10 ist der elektromotorische Antrieb aus Gründen der vereinfachten Darstellung nicht dargestellt. Die Teleskopantriebseinheit 10 ist mit einer ersten Spindel 11 ausgerüstet, die in nicht dargestellter Weise mit dem elektromotorischen Antrieb antriebstechnisch gekoppelt ist. Die Spindel 11 ist aus Stahl gefertigt und massiv. Diese erste Spindel 11 ist ausschließlich mittels des nicht dargestellten elektromotorischen Antriebes rotierend antreibbar und erstreckt sich über die gesamte Länge der Teleskopantriebseinheit, wenn die einzelnen ausfahrbaren, noch näher erläuterten Bauteile sich im eingefahrenen Zustand befinden. Die Drehachse dieser ersten Spindel 11 bildet die Zentralachse der Teleskopantriebseinheit 10. Auf diese erste Spindel 11 ist eine erste Spindelmutter 12 aufgesetzt, die gegen Drehung gesichert ist. Die erste Spindel 11 bildet mit der ersten Spindelmutter 12 die erste Antriebsstufe bzw. die erste Spindelstufe der Teleskopantriebseinheit 10. Eine zweite, als Hohlspindel ausgebildete Spindel 13 übergreift die erste Spindel 12 und steht im Querschnitt gesehen konzentrisch dazu. Das dem nicht dargestellten elektromotorischen Antrieb zugewandte Ende übergreift die erste Spindelmutter 12. Die Spindel 11 ist mit der zweiten Hohlspindel 13 durch einen Mitnehmer 14 drehfest verbunden. Diese Verbindung sollte eine formschlüssige Verbindung sein. Auf die zweite Hohlspindel 13 ist eine weitere zweite Spindelmutter 15 aufgesetzt, die auch gegen Drehung gesichert ist. Die zweite Hohlspindel 13 bildet mit der zweiten Spindelmutter 15 die zweite Antriebsstufe bzw. die zweite Spindelstufe der Teleskopantriebseinheit 10. Die zweite Hohlspindel 13 wird von einem konzentrisch angeordneten Hubrohr 16 übergriffen, dessen dem nicht dargestellten elektromotorischen Antrieb zugewandtes Ende mit der zweiten Spindelmutter 15 fest verbunden ist. Das Hubrohr 16 trägt an seinem freien, der zweiten Spindelmutter 15 abgewandten Ende ein nicht näher erläutertes Anschlußteil, beispielsweise einen Gabelkopf. Das Hubrohr 16 wird von einem konzentrisch angeordneten Außenrohr 17 übergriffen, welches sich in Längsrichtung über die erste Spindel 11 und über die zweite Hohlspindel 13 erstreckt, wenn sich diese im eingefahrenen Zustand befinden. In das freie, den Spindelmuttern 12 und 15 abgewandte Ende des Außenrohres 17 ist eine Endkappe 18 festgesetzt. Damit die zweite Hohlspindel 13 gegenüber der ersten Spindelmutter 12 sich weitgehend ohne Reibung drehen kann, stützt sich das entsprechende Ende der zweiten Hohlspindel 13 an ein Axiallager 19 ab. Die beiden Spindelmuttern 12 und 15 sind an der dem nicht dargestellten elektromotorischen Antrieb zugewandten Seite mit einem Flansch 12 a, 15 a versehen, so daß auf den jeweils im Durchmesser kleineren Bund die zweite Hohlspindel 15 oder das Hubrohr 16 aufgesteckt werden kann.

Es ergibt sich bereits aus der Figur, daß die Teleskopantriebseinheit 10 mit mehr als zwei Antriebs- bzw. Spindelstufen ausgestattet sein kann. Die Teleskopantriebseinheit 10 wäre dann anstelle des Hubrohres 16 mit einer weiteren Hohlspindel ausgestattet, die mit der zweiten Hohlspindel 13 drehfest verbunden sein könnte. Auf diese weitere Spindel wäre dann eine weitere Spindelmutter aufgesetzt. Daran könnten sich dann in gleicher Weise wiederum weitere Antriebs- bzw. Spindelstufen anschließen. Die in dieser Reihe letzte Spindelmutter würde dann mit dem Hubrohr fest verbunden sein. Die Gewindesteigungen können unterschiedlich sein. Außerdem können die Gewindearten unterschiedlich sein, wobei jedoch die Steigungen und Gewindearten der Spindel mit der aufgesetzten Spindelmutter aufeinander abgestimmt sein müssen.

Zum Ausfahren des Hubrohres 16 wird der nicht dargestellte elektromotorische Antrieb eingeschaltet, wodurch die innere Spindel 11 in Drehung versetzt wird. Durch den Mitnehmer 14 wird auch die zweite Hohlspindel 13 mit gleicher Drehzahl und in gleicher Drehrichtung angetrieben. Beide Spindelmuttern 12 und 15 werden in gleicher Richtung linear bewegt. Die lineare Geschwindigkeit des Hubrohres 16 ist jedoch doppelt so groß wie die lineare Geschwindigkeit der zweiten Hohlspindel 13, gleiche Steigungen der Spindeln 11 und 13 vorausgesetzt, da sich die zweite Hohlspindel 13 gegenüber der ersten Spindel 11 bewegt, und auch diese lineare Bewegung auf die Spindelmutter 15 und demzufolge auf das Hubrohr 16 übertragen wird. Da beim Einschalten des nicht dargestellten elektromotorischen Antriebes alle Spindeln 11, 13 bewegt werden, kommt es zu einem kontinuierlichen Ausfahren des Hubrohres 16 bis in die Endstellung. Die Endstellungen der ausfahrbaren Bauteile können durch Endschalter begrenzt werden. Das Einfahren des Hubrohres 16 erfolgt in umgekehrter Weise indem die Drehrichtung des Antriebsmotors umgekehrt wird.

In nicht dargestellter Weise sind in der Hohlspindel 13 und gegebenenfalls auch in den weiteren Hohlspindeln Längsnuten vorgesehen, in denen die Mitnehmer 14 formschlüssig geführt sind. In ebenfalls nicht dargestellter Weise kann die Teleskopantriebseinheit mit einer weiteren Flanschführung versehen sein, um sie an das nicht dargestellte Gehäuse des elektromotorischen Antriebes anzuschließen. In dieser Flanschführung, die im Querschnitt viereckig ausgebildet sein kann, kann eine allgemein bekannte Endschalterleiste eingesetzt werden, um zwei oder auch mehr Endschalter aufzunehmen. Durch diese Endschalter werden die Endstellungen der Spindelmuttern 12 und 15 begrenzt.

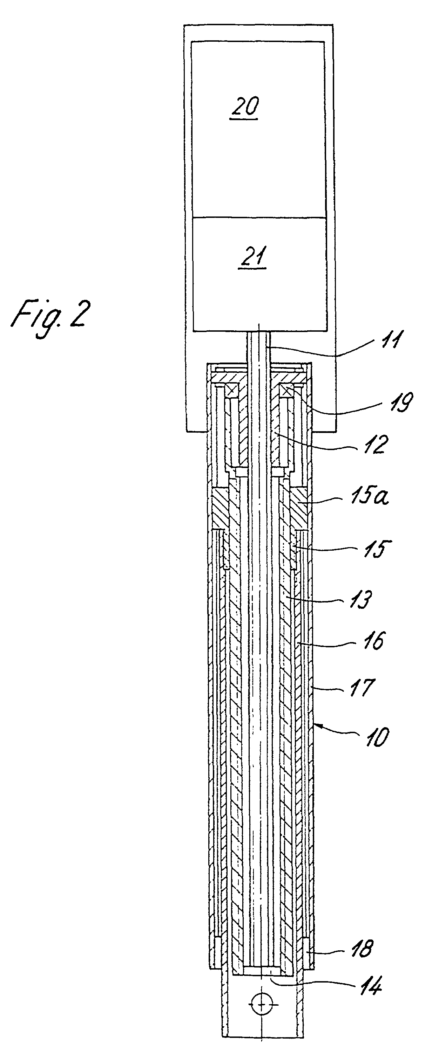

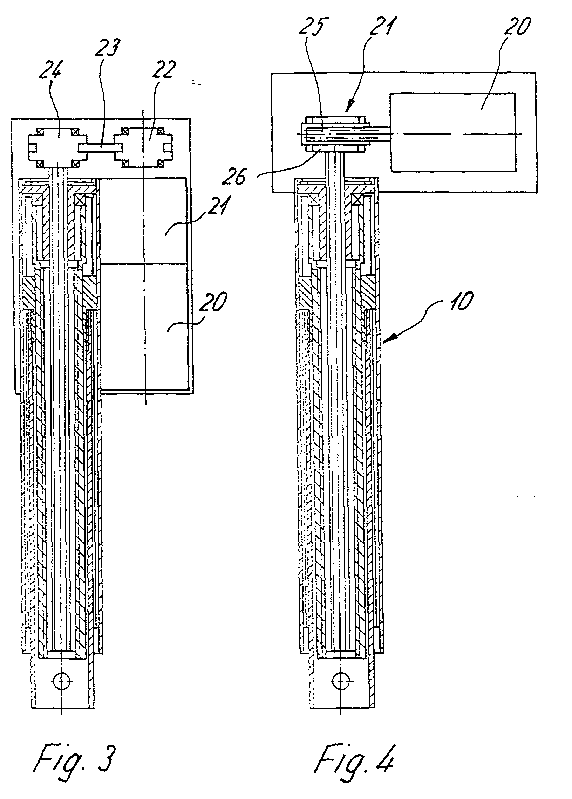

Während in der Figur 1 die Teleskopantriebseinheit dargestellt ist, sind in den Figuren 2 bis 6 verschiedene Möglichkeiten des Antriebes und auch verschiedene Einsatzmöglichkeiten dargestellt. Bei der Ausführung nach der Figur 2 wird eine Antriebseinheit geschaffen, die als Stabantrieb bezeichnet werden kann, da die Drehachse des Rotors des Antriebsmotors 20 mit der Drehachse der ersten Spindel 11 fluchtet. Die erste Spindel 11 ist an das Abtriebsglied eines die Drehzahl des Rotors herabsetzenden Getriebes 21 angeschlossen. Dieses Getriebe ist in bevorzugter Ausführung ein Umlauf- bzw. Planetengetriebe. Bei der Ausführung nach der Figur 3 liegt die Drehachse des Rotors des Antriebsmotors 20 parallel und im Abstand zur Drehachse der ersten Spindel 11. Im dargestellten Ausführungsbeispiel ist der Motor direkt an das Außenrohr 17 der Teleskopantriebseinheit 10 angesetzt. Dadurch wird eine kompakte Bauweise erreicht. Die dem Abtriebsglied zugewandte Gehäusewand des Getriebes 21 fluchtet mit der Stirnwand der Teleskopantriebseinheit 10. Auf den Abtriebszapfen des Getriebes 21 ist eine Riemenscheibe 22 drehfest aufgesetzt, so dass über einen Riemen 23 eine weitere Riemenscheibe 24 angetrieben wird. Diese Riemenscheibe 24 ist drehfest auf die erste Spindel 11 aufgesetzt. Im dargestellten Ausführungsbeispiel sind die Durchmesser der beiden Riemenscheiben 22 und 24 gleich, so dass die Spindel 11 mit der gleichen Drehzahl angetrieben wird, wie der Abtriebszapfen des Getriebes 22. Die Durchmesser der Riemenscheiben 22, 24 könnten auch unterschiedlich sein, so dass je nach deren Ausführung die Drehzahl der Spindel 11 größer oder kleiner ist als die des Abtriebszapfens des Getriebes 22. Bei der Ausführung nach der Figur 4 steht die Drehachse des Rotors des Antriebsmotors 20 rechtwinklig zur Drehachse der ersten Spindel 11. Die Drehzahl wird ebenfalls durch ein Getriebe 21 herabgesetzt, welches im dargestellten Ausführungsbeispiel aus einer vom Antriebsmotor 20 angetriebenen Schnecke 25 und einem auf die Spindel 11 drehfest aufgesetzten Schneckenrad 26 besteht. Grundsätzlich wären auch andere Getriebe einsetzbar. Der Antriebsmotor 20 ist bevorzugt ein Lüftermotor.

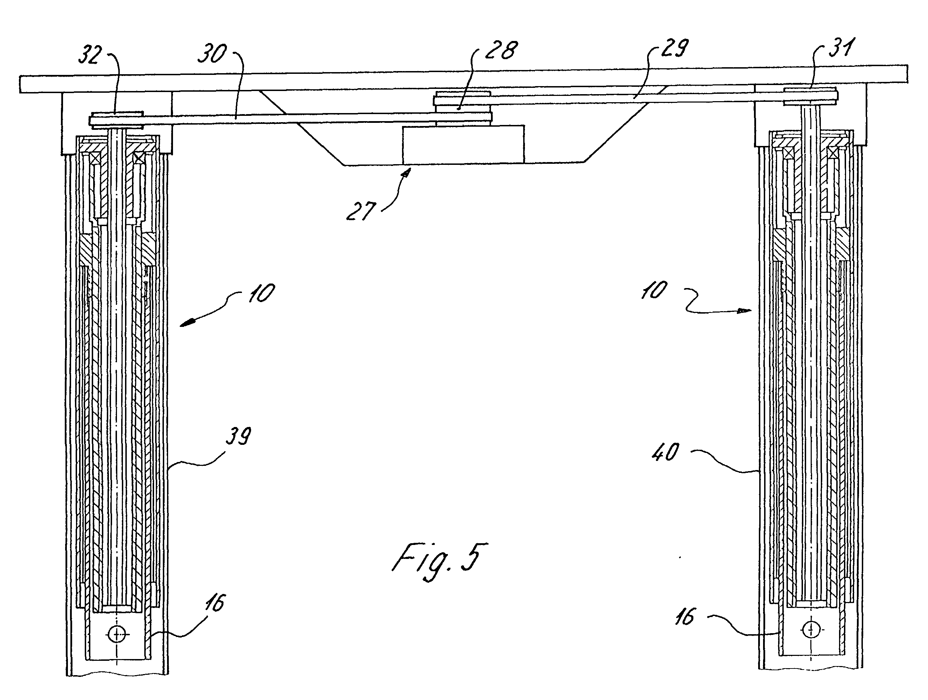

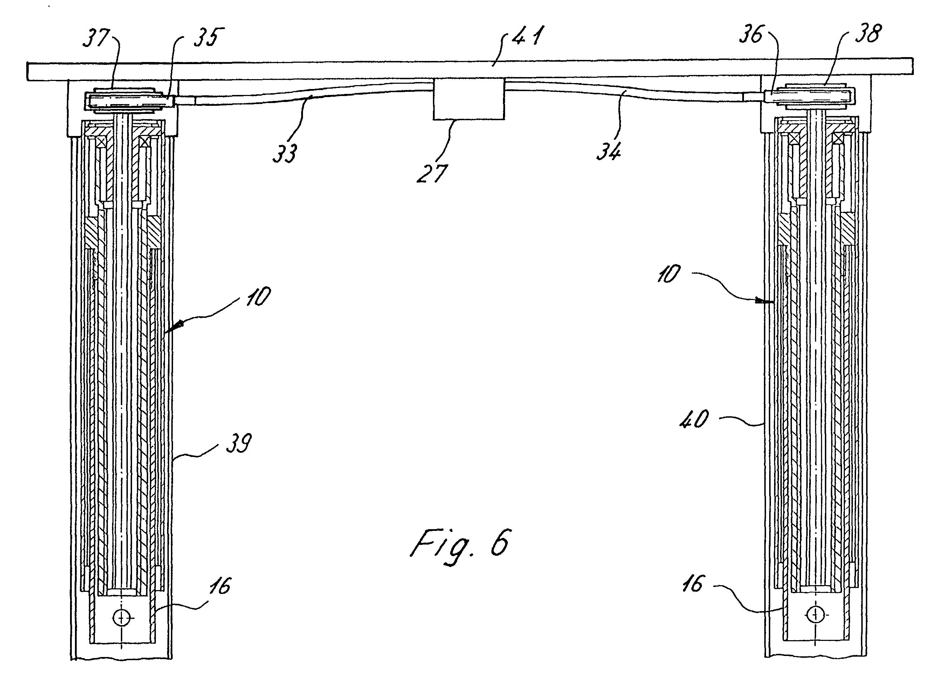

Bei der Ausführung nach der Figur 5 werden zwei im Abstand zueinander angeordnete Teleskopantriebseinheiten von einer zentralen Antriebseinheit 27 über Riementriebe angetrieben. Im dargestellten Ausführungsbeispiel liegt die zentrale Antriebseinheit 27 mittig zwischen den beiden Teleskopantriebseinheiten. Die Abstände könnten jedoch auch unterschiedlich sein. Die zentrale Antriebseinheit 27 enthält in nicht dargestellter Weise einen Antriebsmotor und ein Getriebe, auf dessen Abtriebszapfen eine Riemenscheibe 28 drehfest aufgesetzt ist. Über zwei Riemen 29, 30 werden die Riemenscheiben 31, 32 angetrieben, die auf die Spindeln 11 aufgesetzt sind. Im dargestellten Ausführungsbeispiel ist die Riemenscheibe 28 eine Doppelriemenscheibe. Es ist jedoch auch möglich, dass zwei einzelne Riemenscheiben auf den Abtriebszapfen der zentralen Antriebseinheit 27 aufgesetzt werden. Bei der Ausführung nach der Figur 6 werden ebenfalls zwei im Abstand zueinander angeordnete Teleskopantriebseinheiten 10 von einer zentralen Antriebseinheit 27 angetrieben. Bei dieser Ausführung muß ein Getriebe so gestaltet sein, dass es zwei Abtriebszapfen enthält, deren Drehzahlen mit der Drehzahl des Rotors des Antriebsmotors übereinstimmen oder annähernd übereinstimmen. An diese Abtriebszapfen sind zwei Antriebselemente 33, 34 angeschlossen, deren Abtriebsglieder einstellbar sind. Die Antriebselemente 33, 34 sind im dargestellten Ausführungsbeispiel biegsame Wellen, es könnten jedoch auch Kardan- bzw. Gelenkwellen verwendet werden. Die Antriebselemente 33, 34 treiben Schnecken 35, 36 an, die in nicht näher dargestellter Weise gelagert sind. Die Schnecken 35, 36 stehen mit Schneckenrädern 37, 38 in Eingriff, die auf die Spindeln 11 der Teleskopantriebseinheiten 10 drehfest aufgesetzt sind. Anstelle von biegsamen Wellen könnten auch Gelenk- oder Kardanwellen eingesetzt werden. Anstelle von biegsamen Wellen oder Kardanwellen könnten auch normale, geradlinige Wellen verwendet werden, die vorzugsweise einen mehreckigen Querschnitt aufweisen, so dass ein Formschluß mit den Abtriebsgliedern der Antriebseinheit 27 gegeben ist. Der Antrieb der Spindeln 11 könnte dann über Winkeltriebe, z.B. Kegelradgetriebe erfolgen.

Bei den Ausführungsbeispielen nach den Figuren 5 und 6 sind die Teleskopantriebseinheiten 10 in Tischbeine 39, 40 eingebaut, um eine Tischplatte 41 zu verstellen. Die zentralen Antriebseinheiten 27 sind unter der Tischplatte angeordnet, so dass sie beim Verfahren der Tischplatte 41 ebenfalls mitbewegt werden. Die vorstehenden Ausführungen sind beispielhaft zu sehen. In nicht näher erläuterter Weise können die Endstellungen des ausfahrbaren Hubrohres 16 bestimmt werden, beispielsweise durch Endschalter oder durch Messung der Umdrehungen von rotierenden Teilen oder durch das Messen des Hubes des Hubrohres 16.

Die Erfindung ist nicht auf das dargestellte Ausführungsbeispiel beschränkt. Wesentlich ist die antriebstechnische Verbindung der Spindeln 11 und 13, so daß sie gleichzeitig angetrieben werden.

## Patentansprüche

1. Teleskopantriebseinheit (10) für ein verstellbares Möbelbauteil eines Möbels, die mit mindestens zwei rotierend antreibbaren Spindeln (11, 13) ausgerüstet ist, von denen eine mit einem Antrieb (20) gekoppelt und ausschließlich rotierend antreibbar und die zweite bzw. die weiteren Spindeln zur Verfahrbarkeit in ihrer Längsrichtung bzw. in ihren Längsrichtungen durch Mitnehmer (14) derart miteinander gekoppelt sind, dass sie mit gleicher Drehzahl und in gleicher Drehrichtung rotierend antreibbar sind, und die Mitnehmer (14) formschlüssig in angepassten Längsnuten der als Hohlspindeln ausgebildeten Spindeln (13) geführt sind, **dadurch gekennzeichnet, dass** an die letzte Spindelmutter (15) ein gegen Drehung gesichertes Hubrohr (16) angeschlossen ist, dessen freies Ende mit dem zu verstellenden Möbelbauteil verbindbar ist und dass jede Spindelmutter (12, 15) an der dem motorischen Antrieb zugewandten Seite einen Flansch (12a, 15a) aufweist, der als Schiebeelement für die jeweilige Hohlspindel bzw. für das Hubrohr wirkt.

2. Teleskopantriebseinheit nach Anspruch 1, **dadurch gekennzeichnet, dass** die jeweilige Hohlspindel (13) oder das Hubrohr (16) auf einen kleineren Bund der jeweiligen Spindelmutter (12, 15) aufgesetzt ist.

3. Teleskopantriebseinheit nach Anspruch 1, **dadurch gekennzeichnet, dass** die erste, mit dem elektromotorischen Antrieb (20) gekoppelte Spindel (11) eine massive Stahlspindel ist, und dass die weiteren Hohlspindeln (13) aus Kunststoff bestehen.

4. Teleskopantriebseinheit nach einem oder mehreren der vorhergehenden Ansprüche 1 bis 3, **dadurch gekennzeichnet, dass** die Teleskopantriebseinheit (10) mit einer weiteren Flanschführung versehen ist, welche mit dem Gehäuse des elektromotorischen Antriebes verbunden ist.

5. Teleskopantriebseinheit nach Anspruch 4, **dadurch gekennzeichnet, dass** in der Flanschführung eine Endschalterleiste zur Aufnahme von zwei oder mehreren Endschaltern angeordnet ist.

6. Teleskopantriebseinheit nach einem oder mehreren der vorhergehenden Ansprüche 1 bis 5, **dadurch gekennzeichnet, dass** die erste zentrale Spindel (11) mit dem Abtriebsglied eines Getriebes (21) gekoppelt ist, dessen Eingangsglied mit einem Motor (20) gekoppelt ist, und dass die Drehachse des Rotors des Antriebsmotors (20) mit der Drehachse der ersten Spindel (11) fluchtet.

7. Teleskopantriebseinheit nach einem oder mehreren der vorhergehenden Ansprüche 1 bis 5, **dadurch gekennzeichnet, dass** die Drehachse des Rotors des Antriebsmotors (20) parallel und im Abstand zur Drehachse der ersten Spindel (11) verläuft, und dass das Abtriebsglied des Getriebes (21) über einen Riementrieb (22, 23, 24) oder eine Räderkette mit der ersten Spindel (11) antriebstechnisch gekoppelt ist.

8. Teleskopantriebseinheit nach Anspruch 6 oder 7, **dadurch gekennzeichnet, dass** das Getriebe (21) ein Rädergetriebe ist, dessen Zentralachse mit der Drehachse des Rotors des Motors (20) fluchtet.

9. Teleskopantriebseinheit nach einem oder mehreren der vorhergehenden Ansprüche 1 bis 5, **dadurch gekennzeichnet, dass** die Drehachse des Rotors des Antriebsmotors (20) senkrecht zur Drehachse der ersten Spindel (11) steht, und dass zwischen dem Antriebsmotor (20) und der ersten Spindel (11) ein die Drehzahl herabsetzender Rädertrieb mit sich kreuzenden Achsen, vorzugsweise ein Schneckentrieb (25) angeordnet ist.

10. Teleskopantriebseinheit nach einem oder mehreren der vorhergehenden Ansprüche 1 bis 9, **dadurch gekennzeichnet, dass** mindestens zwei Teleskopantriebseinheiten (10) von einer zentralen, mit einem Antriebsmotor ausgerüsteten Antriebseinheit (27) antriebstechnisch gekoppelt, vorzugsweise derart antriebstechnisch gekoppelt sind, dass die linear bewegbaren Antriebsteile (12, 15, 16) aller Teleskopantriebseinheiten (10) synchron bewegbar sind.

11. Teleskopantriebseinheit nach einem oder mehreren der vorhergehenden Ansprüche 1 bis 10, **dadurch gekennzeichnet, dass** mindestens zwei Teleskopantriebseinheiten über eine entsprechende Anzahl von Wellen, vorzugsweise mit mehreckigen Querschnitten von der Antriebseinheit 10 antreibbar sind und dass die zentralen Spindeln (11) der Teleskopantriebseinheiten (10) über Winkeltriebe, vorzugsweise über Kegelradgetriebe mit den Wellen gekoppelt sind.

12. Teleskopantriebseinheit nach einem oder mehreren der vorhergehenden Ansprüche 1 bis 10, **dadurch gekennzeichnet, dass** die zentrale Antriebseinheit (27) über Riementriebe (28, 29, 30, 31, 32) oder über Antriebselemente (34, 35) mit der ersten Spindel (11) jedes Teleskopantriebes (10) antriebstechnisch gekoppelt ist, deren Ausgangsglieder gegenüber den Eingangsgliedern wahlweise verstellbar sind, z. B. über biegsame Wellen, Kardanwellen oder dergleichen.

13. Teleskopantriebseinheit nach einem oder mehreren der vorhergehenden Ansprüche 1 bis 12, **dadurch gekennzeichnet, dass** die Teleskopantriebseinheiten (10) in eine Säule, in ein Tischbein oder dergleichen einbaubar ist.

## Claims

1. Telescopic drive unit (10) which is intended for an adjustable component of a piece of furniture and is equipped with at least two spindles (11, 13) which can be driven in rotation, and of which one is coupled to a drive (20) and can be driven exclusively in rotation and the second spindle or the further spindles, for displacement capability in its longitudinal direction or in their longitudinal directions, is/are coupled by carry-along elements (14) such that they can be driven in rotation at the same speed and in the same direction of rotation, and the carry-along elements (14) are guided in a form-fitting manner in matching longitudinal grooves of the spindles (13) designed as hollow spindles, **characterized in that** connected to the final spindle nut (15) is a lifting tube (16) which is secured against rotation and of which the free end can be connected to the furniture component which is to be adjusted, and **in that** each spindle nut (12, 15), on the side which is directed towards the motor drive, has a flange (12a, 15a) which acts as a sliding element for the respective hollow spindle and/or for the lifting tube.

2. Telescopic drive unit according to Claim 1, **characterized in that** the respective hollow spindle (13) or the lifting tube (16) is positioned on a relatively small collar of the respective spindle nut (12, 15).

3. Telescopic drive unit according to Claim 1, **characterized in that** the first spindle (11), which is coupled to the electromotive drive (20), is a solid steel spindle, and **in that** the further, hollow spindles (13) consist of plastic.

4. Telescopic drive unit according to one or more of the preceding Claims 1 to 3, **characterized in that** the telescopic drive unit (10) is provided with a further flange guide, which is connected to the housing of the electromotive drive.

5. Telescopic drive unit according to Claim 4, **characterized in that** a limit-switch panel for accommodating two or more limit switches is arranged in the flange guide.

6. Telescopic drive unit according to one or more of the preceding Claims 1 to 5, **characterized in that** the first, central spindle (11) is coupled to the output member of a gear mechanism (21), of which the input member is coupled to a motor (20), and **in that** the axis of rotation of the rotor of the drive motor (20) is aligned with the axis of rotation of the first spindle (11).

7. Telescopic drive unit according to one or more of the preceding Claims 1 to 5, **characterized in that** the axis of rotation of the rotor of the drive motor (20) runs parallel to, and at a distance from, the axis of rotation of the first spindle (11), and **in that** the output member of the gear mechanism (21) is coupled in drive terms to the first spindle (11) via a belt drive (22, 23, 24) or a wheel chain.

8. Telescopic drive unit according to Claim 6 or 7, **characterized in that** the gear mechanism (21) is a wheel gear mechanism, of which the central axis is aligned with the axis of rotation of the rotor of the motor (20).

9. Telescopic drive unit according to one or more of the preceding Claims 1 to 5, **characterized in that** the axis of rotation of the rotor of the drive motor (20) is located perpendicularly to the axis of rotation of the first spindle (11), and **in that** arranged between the drive motor (20) and the first spindle (11) is a wheel drive with crossover axes which reduces the speed, preferably a worm drive (25).

10. Telescopic drive unit according to one or more of the preceding Claims 1 to 9, **characterized in that** at least two telescopic drive units (10) are coupled in drive terms by a central drive unit (27) equipped with a drive motor, and are preferably coupled in drive terms such that the linearly moveable drive parts (12, 15, 16) of all the telescopic drive units (10) can be moved synchronously.

11. Telescopic drive unit according to one or more of the preceding Claims 1 to 10, **characterized in that** at least two telescopic drive units can be driven via a corresponding number of shafts, preferably with polygonal cross sections, of the drive unit (10), and **in that** the central spindles (11) of the telescopic drive units (10) are coupled to the shafts via angular drives, preferably via bevel gear mechanisms.

12. Telescopic drive unit according to one or more of the preceding Claims 1 to 10, **characterized in that** the central drive unit (27) is coupled in drive terms, via belt drives (28, 29, 30, 31, 32) or via drive elements (34, 35), to the first spindle (11) of each telescopic drive (10), of which the output members can optionally be adjusted, e.g. via flexible shafts, cardan shafts or the like, in relation to the input members.

13. Telescopic drive unit according to one or more of the preceding Claims 1 to 12, **characterized in that** the telescopic drive units (10) can be installed in a column, in a table leg or the like.

## Revendications

1. Unité d'entraînement télescopique (10) pour un élément réglable de meuble, unité qui est équipée d'au moins deux broches (11, 13) pouvant être actionnées en rotation, dont l'une est couplée à un entraînement (20) et ne peut être actionnée qu'en rotation et la deuxième broche ou les autres broches sont couplées les unes aux autres par des taquets d'entraînement (14), pour la capacité de déplacement dans leur sens longitudinal ou dans leurs sens longitudinaux, de telle sorte qu'elles puissent être entraînées en rotation à la même vitesse et dans le même sens de rotation, et les taquets d'entraînement (14) sont guidés par solidarisation dans des rainures longitudinales adaptées des broches (13) configurées en tant que broches creuses, **caractérisé en ce qu'**est raccordé, au dernier écrou de broche (15), un tube télescopique (16) avec une sûreté contre la rotation, tube dont l'extrémité libre peut être reliée à l'élément de meuble à régler et **en ce que** chaque écrou de broche (12, 15) comporte, sur le côté tourné vers l'entraînement à moteur, une bride (12a, 15a) qui agit en tant qu'élément coulissant pour la broche creuse respective ou pour le tube télescopique.

2. Unité d'entraînement télescopique selon la revendication 1, **caractérisée en ce que** la première broche creuse respective (13) ou le tube télescopique (16) est posé(e) sur un collet de taille plus réduite de l'écrou de broche respectif (12, 15).

3. Unité d'entraînement télescopique selon la revendication 1, **caractérisée en ce que** la première broche (11), couplée à l'entraînement à électromoteur (20), est une broche en acier massive et **en ce que** les autres broches creuses (13) sont composées de matière plastique.

4. Unité d'entraînement télescopique selon une ou plusieurs des revendications précédentes 1 à 3, **caractérisée en ce que** l'unité d'entraînement télescopique (10) est munie d'une autre glissière à bride, laquelle est reliée au boîtier de l'entraînement à électromoteur.

5. Unité d'entraînement télescopique selon la revendication 4, **caractérisée en ce que**, dans la glissière à bride, est disposée une réglette à interrupteur de fin de course pour loger un ou plusieurs interrupteurs de fin de course.

6. Unité d'entraînement télescopique selon une ou plusieurs des revendications précédentes 1 à 5, **caractérisée en ce que** la première broche centrale (11) est couplée avec l'élément mené d'un engrenage (21), dont l'élément d'entrée est couplé à un moteur (20), et **en ce que** l'axe de rotation du rotor du moteur d'entraînement (20) est aligné avec l'axe de rotation de la première broche (11).

7. Unité d'entraînement télescopique selon une ou plusieurs des revendications précédentes 1 à 5, **caractérisée en ce que** l'axe de rotation du rotor du moteur d'entraînement (20) s'étend de manière parallèle et à distance par rapport à l'axe de rotation de la première broche (11) et **en ce que** l'élément mené de l'engrenage (21) est couplé à la première broche (11), au moyen de la technique d'entraînement, par le biais d'une commande à courroie (22, 23, 24) ou d'une chaîne à roue.

8. Unité d'entraînement télescopique selon la revendication 6 ou 7, **caractérisée en ce que** l'engrenage (21) est un train d'engrenages dont l'axe central est aligné avec l'axe de rotation du rotor du moteur (20).

9. Unité d'entraînement télescopique selon une ou plusieurs des revendications précédentes 1 à 5, **caractérisée en ce que** l'axe de rotation du rotor du moteur d'entraînement (20) est positionné à la verticale par rapport à l'axe de rotation de la première broche (11) et **en ce que**, entre le moteur d'entraînement (20) et la première broche (11), est disposé un train d'engrenages abaissant la vitesse, avec des axes se croisant, de préférence un engrenage à vis sans fin (25).

10. Unité d'entraînement télescopique selon une ou plusieurs des revendications précédentes 1 à 9, **caractérisée en ce qu'**au moins deux unités d'entraînement télescopiques (10) sont couplées, au moyen de la technique d'entraînement, par une unité d'entraînement centrale (27) équipée d'un moteur d'entraînement, de préférence couplées par la technique d'entraînement de telle sorte que les pièces d'entraînement (12, 15, 16) linéairement mobiles, de toutes les unités d'entraînement télescopiques, puissent être déplacées de manière synchrone.

11. Unité d'entraînement télescopique selon une ou plusieurs des revendications précédentes 1 à 10, **caractérisée en ce qu'**au moins deux unités d'entraînement télescopiques peuvent être actionnées par le biais d'un nombre correspondant d'arbres, de préférence avec des coupes transversales à plusieurs angles, par l'unité d'entraînement (10) et **en ce que** les broches centrales (11) des unités d'entraînement télescopiques (10) sont couplées aux arbres par le biais de commandes par engrenage d'angle, de préférence par le biais d'engrenages coniques.

12. Unité d'entraînement télescopique selon une ou plusieurs des revendications précédentes 1 à 10, **caractérisée en ce que** l'unité d'entraînement centrale (27) est couplée, au moyen de la technique d'entraînement, à la première broche (11) de chaque entraînement télescopique (10) par le biais de commandes à courroie (28, 29, 30, 31, 32) ou d'éléments d'actionnement (34, 35), broche dont les éléments de sortie sont réglables, au choix, par rapport aux éléments d'entrée, par exemple par le biais d'arbres souples, d'arbres cardans ou d'éléments du même genre.

13. Unité d'entraînement télescopique selon une ou plusieurs des revendications précédentes 1 à 12, **caractérisée en ce que** les unités d'entraînement télescopiques (10) peuvent être montées dans une colonne, dans un pied de table ou dans un élément du même genre.
